# EUROPÄISCHE PATENTSCHRIFT

(11) **EP 2 961 646 B1**
(45) Veröffentlichungstag und Bekanntmachung des Hinweises auf die Patenterteilung: **22.08.2018**
(21) Anmeldenummer: 14700741.3
(22) Anmeldetag: 17.01.2014
(51) Int. Cl.: B62D 7/14, B60G 3/20, B60G 7/00, B60G 21/05

(54) **LENKAKTUATOR-ANORDNUNG ZWISCHEN DEN HINTERRÄDERN EINES ZWEISPURIGEN FAHRZEUGS**
STEERING ACTUATOR ARRANGEMENT BETWEEN THE REAR WHEELS OF A MOTOR VEHICLE
EMPLACEMENT D'UN ACTIONNEUR DE DIRECTION ENTRE LES ROUES ARRIÈRE D'UN VÉHICULE AUTOMOBILE

(30) Priorität: 26.02.2013 DE 102013203188
(43) Veröffentlichungstag der Anmeldung: 06.01.2016
(73) Patentinhaber: Bayerische Motoren Werke Aktiengesellschaft, 80809 München (DE)
(72) Erfinder: SCHMIDT, Roland, 82131 Stockdorf (DE); SCHOLZ, Hubert, 81543 München (DE); KETTENBERGER, Johann, 84543 Winhoering (DE)
(86) Internationale Anmeldenummer: PCT/EP2014/050926
(87) Internationale Veröffentlichungsnummer: WO 2014/131548

(56) Entgegenhaltungen:
- EP-A1- 0 307 547
- EP-B1- 0 277 650
- DE-A1- 2 928 099
- DE-A1- 10 160 764
- DE-A1-102007 053 322
- GB-A- 2 275 662
- JP-A- H09 328 076
- JP-A- S60 197 413
- US-A- 3 982 604
- US-A1- 2006 070 481
- US-A1- 2010 289 238
- US-B2- 7 111 849

## Beschreibung

Die Erfindung betrifft eine Anordnung eines an den Hinterrädern eines zweispurigen Fahrzeugs einen Lenkwinkel einstellenden und letztlich am Fahrzeug-Aufbau abgestützten Aktuators, dessen über (zumindest) eine in Fahrzeug-Querrichtung verlagerbare Stellstange dargestellte Verstellbewegung über einen an einem Hinterachsträger oder am Fahrzeug-Aufbau verschwenkbar gelagerten Zwischenhebel auf einen das jeweilige Hinterrad anteilig führenden Spurlenker übertragen wird. Zum Stand der Technik wird neben der EP 0 307 547 A1 oder der EP 0 277 650 B1 beispielsweise auf die DE 29 28 099 A1 oder die DE 101 60 764 A1 verwiesen.

Bekannt sind Hinterradlenkungen mit elektrischen oder hydraulischen Aktuatoren sowie Systeme mit mechanisch zur Vorderradlenkung verkoppeltem Antrieb. Zur Realisierung einer Hinterradlenkung wird bei Mehrlenkerachsen üblicherweise einer der radführenden Lenker zumindest annähernd in Fahrzeugquerrichtung verschiebbar über einen geeigneten Aktuator am üblicherweise vorgesehenen Hinterachsträger abgestützt. Vorzugsweise wird hierfür ein Lenker gewählt, der beim Verschieben/Verlagern einen relativ großen Lenkwinkel am zugehörigen Rad hervorruft, wie der sog. Spurlenker oder ein anderer, vorzugsweise unterer Querlenker, wenngleich bei der in der eingangs erstgenannten Schrift gezeigten Hinterradaufhängung diese Funktion von einem oberen vorderen Querlenker übernommen wird. Dabei wird vorliegend der mittels des Aktuators zum Lenken des Hinterrads verlagerbare radführende Lenker grundsätzlich als Spurlenker bezeichnet und es wird ein Verstellelement des Aktuators, welches gegenüber dem Gehäuse des Aktuators verlagerbar ist und an welchem gemäß o.g. Stand der Technik das dem Rad abgewandte Ende der Spurstange angelenkt ist, vorliegend als Stellstange bezeichnet.

Um die Kräfte in der Lagerung des besagten Aktuators gering zu halten, sollte der Spurlenker frei von "Vorlast" sein, d.h. es sollte insbesondere der Kraftpfad einer den Fahrzeug-Aufbau anteilig am Hinterrad abstützenden Tragfeder sowie der Kraftpfad eines dieser Tragfeder funktional parallel geschalteten Schwingungsdämpfers nicht durch bzw. über den Spurlenker geführt sein. Allerdings kann es aus Bauraumgründen erforderlich sein, von dieser Regel abzuweichen, so wie dies in der eingangs zweitgenannten gattungsbildenden EP 0 277 650 B1 gezeigt ist. Um dann trotz Abstützung der Tragfeder auf dem Spurlenker die infolge dessen auf den Aktuator wirkenden Kräfte möglichst gering zu halten, ist in dieser genannten Schrift in Form eines zweiten Ausführungsbeispiels vorgeschlagen, diese Kräfte über einen sog. Zwischenhebel am Hinterachsträger (und somit am Fahrzeug-Aufbau) abzustützen, der um die Fahrzeug-Längsachse verschwenkbar am Hinterachsträger oder Fzg.-Aufbau gelagert ist und an dem weiterhin die Stellstange des Aktuators sowie der Spurlenker angreifen.

In Abhängigkeit von der Anordnung der jeweiligen Gelenkpunkte am Zwischenhebel, nämlich den Gelenkpunkten des Spurlenkers und der Aktuator-Stellstange sowie dem Gelenkpunkt des Zwischenhebels gegenüber dem Hinterachsträger (oder Fzg.-Aufbau) treten jedoch mit einer gewünschten Verlagerung des Spurlenkers in Fahrzeug-Querrichtung auch mehr oder weniger große Änderungen in der Höhe dieser Gelenkpunkte auf. Weiterhin bietet es sich zwar an, den besagten Aktuator zwischen dem Spurlenker des linksseitigen und dem Spurlenker des rechtsseitigen Hinterrades des zweispurigen Fahrzeugs anzuordnen, jedoch ist dies nur dann möglich, wenn die Baulänge des Aktuators dies zulässt. Weiterhin können mit einer kinematisch günstigen Anordnung des Aktuators bei einem mit einer Abgasanlage für ein Fzg.-Antriebsaggregat ausgerüsteten Kraftfahrzeug Bauraum-Probleme auftreten, alldieweil die Abgasablage oftmals genau durch den günstigsten Anbauort eines Aktuators zum Lenken der Fzg.-Hinterräder hindurch verlaufen sollte. Beispielsweise aus der eingangs weiterhin genannten DE 29 28 099 A1 ist es an einem Vorderachs-Lenksystem im Hinblick auf eine optimale Bauraum-Ausnutzung bekannt, die Zahnstange eines Lenkgetriebes (welche bei Übertragung auf die vorliegende Erfindung den Stellstangen des Aktuators entspricht) fahrzeugfest lagern und die mit den Fahrzeug-Rädern verbundenen Spurlenker am Gehäuse des Lenkgetriebes abzustützen.

Während für einfache Spurlenker (bspw. gemäß der DE 29 28 099 A1), auf denen bspw. keine Tragfeder abgestützt ist und für welche folglich kein sog. Zwischenhebel gemäß vorliegender Erfindung benötigt wird, ein verschiebbares Lenkgetriebe-Gehäuse relativ einfach darstellbar ist, ist mit solchen Zwischenhebeln eine kinematisch einwandfreie Anordnung wesentlich schwerer darstellbar.

Hierfür eine geeignete Lenk-Aktuator-Anordnung nach dem Oberbegriff des Anspruchs 1 aufzuzeigen, ist daher Aufgabe der vorliegenden Erfindung. Die Lösung dieser Aufgabe ergibt sich mit den Merkmalen des Anspruchs 1.

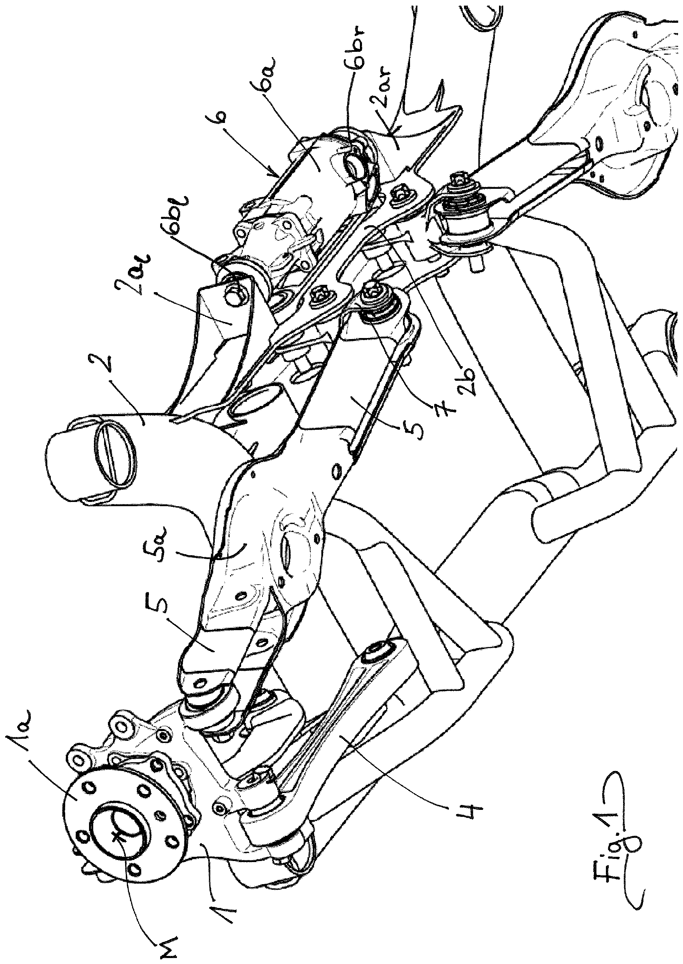

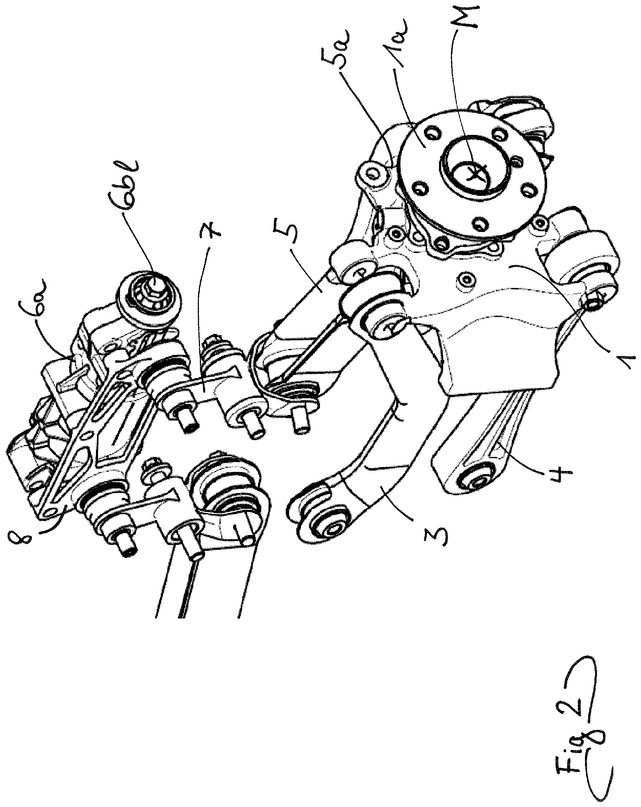

Am besten lassen sich die erfindungsgemäßen Merkmale anhand eines im weiteren erläuterten und in den beigefügten Figuren gezeigten Ausführungsbeispiels erläutern, ohne dass dies zu einer Beschränkung der Patentansprüche führt, wobei **Fig.1** eine räumliche Ansicht eines Hinterachsträgers eines Personenkraftwagens mit erfindungsgemäß angeordnetem Aktuator von schräg unten links und geringfügig in Fahrtrichtung betrachtet zeigt, während in **Fig.2** eine Ansicht von schräg oben links geringfügig gegen Fahrtrichtung betrachtet dargestellt ist.

Mit der Bezugsziffer 1 ist der linksseitige Radträger für ein an einem im Radträger 1 drehbar gelagerten Nabenflansch 1a anflanschbares (nicht dargestelltes) Hinterrad eines Kraftfahrzeugs gekennzeichnet, der über mehrere Lenker, von denen in den Figuren drei Stück dargestellt sind, gegenüber einem Hinterachsträger 2 des Fahrzeugs wie üblich geführt ist. Hier figürlich dargestellt sind ein oberer Querlenker 3, ein unterer und vor der Radmitte M liegender Querlenker 4 sowie ein unterhalb und hinter Radmitte M am Radträger 1 angelenkter Spurlenker 5. Es ist der annähernd rechteckige Hinterachsträger 2 nur in Fig.1 dargestellt und es wird auf dessen detaillierten Aufbau sowie auf die figürlich ebenfalls nicht dargestellte Anlenkung der genannten Querlenker 3, 4 am Hinterachsträger 2 nicht näher eingegangen, da dies wie grundsätzlich üblich gestaltet ist bzw. gestaltet sein kann.

Vorliegend wesentlich hingegen ist die gelenkige Anbindung des dem jeweiligen Radträger 1 abgewandten Endes des linkseitigen bzw. rechtsseitigen Spurlenkers 5 an einem bzw. bezüglich eines Aktuators 6, mit Hilfe dessen eine Lenkbewegung des jeweiligen Hinterrads erzielt werden kann, indem der Aktuator 6 den jeweiligen Spurlenker 5 im wesentlichen in Fzg.-Querrichtung geringfügig nach außen oder nach innen, d.h. von der Fzg.-Mitte weg oder zur Fzg.-Mitte hin verlagert. Hierfür weist der Aktuator 6 vorliegend zwei sog. Stellstangen 6bₗ, 6bᵣ auf, die an den einander gegenüberliegenden Stirnseiten des zylindrischen (und annähernd einen Kreiszylinder bildenden) Gehäuses 6a des Aktuators 6 in Fzg.-Querrichtung ausgerichtet austreten und in Fzg.-Querrichtung gegenüber dem Gehäuse 6a des Aktuators 6 geringfügig verlagerbar sind, wobei der Aktuator 6 wie an Fahrzeug-Hinterradlenkungen üblich zur Initiierung dieser Verlagerung elektromotorisch betrieben sein kann. Die zylindrische Gestalt des Aktuator-Gehäuses 6a ergibt sich dabei im wesentlichen aus der Form eines darin vorgesehenen Elektromotors mit vorgelagertem Getriebe zur Verlagerung der besagten Stellstangen 6bₗ, 6bᵣ gegenüber dem Gehäuse 6a. Der tiefgestellte Index "l" bzw. "r" in der jeweiligen Stellstangen-Bezugsziffer 6bₗ, 6bᵣ steht dabei für "links" bzw. "rechts" und es wird im Stand der Technik ebenso wie bei der vorliegenden Erfindung bei einer Verlagerung der linksseitigen Stellstange 6bₗ um eine bestimmte geringe Wegstrecke bspw. nach links sinnvollerweise auch die rechtsseitige Stellstange 6bᵣ um die gleiche geringe Wegstrecke nach links verlagert um am linken und am rechten Hinterrad des Fahrzeugs den gleichen Lenkwinkel zu erzeugen. Während jedoch im Stand der Technik (vgl. bspw. die beiden eingangs genannten Schriften) der Aktuator 6 mit seinem Gehäuse (6a) am Hinterachsträger 2 (oder Fzg.-Aufbau) abgestützt bzw. gelagert ist und im Stand der Technik die freien Enden der Stellstangen (6bₗ, 6bᵣ) direkt oder unter Zwischenschaltung eines Zwischenhebels indirekt mit den den Radträgern (1) abgewandten Enden der Spurlenker (5) verbunden sind, ist vorliegend sowie erfindungsgemäß der Aktuator 6 über seine (hier) beiden Stellstangen 6bₗ, 6bᵣ am Hinterachsträger 2 gelagert und es sind die den Radträgern 1 abgewandten Enden der beiden Spurlenker 5 unter Zwischenschaltung eines Zwischenhebels 7 am Gehäuse des Aktuators 6 angelenkt, wie im weiteren noch detailliert beschrieben wird. Der Vollständigkeit halber sei jedoch zunächst darauf hingewiesen, dass alternativ auch nur eine einzige Aktuator-Stellstange (6b) vorgesehen sein kann, über die der Aktuator (6) am Hinterachsträger 2 gelagert ist, ebenso wie nur einer der Spurlenker (5) direkt oder indirekt am Gehäuse (6a) des Aktuators (6) angelenkt sein kann, während der andere Spurlenker geeignet mit dem erstgenannten Spurlenker verbunden sein kann. Für die Abstützung des Aktuators 6 über seine Stellstangen 6bₗ, 6bᵣ am Hinterachsträger 2 sind dabei an diesem geeignet zwei Traglaschen 2aₗ, 2aᵣ vorgesehen, d.h. starr mit der Grundstruktur des Hinterachsträgers 2 verbunden, mit denen linksseitig bzw. rechtsseitig des Aktuator-Gehäuses 6a das freie Ende der jeweiligen Stellstange 6bₗ bzw. 6bᵣ vorzugsweise lösbar verschraubt ist. Neben diesen beiden nur in Fig.1 dargestellten Traglaschen 2aₗ, 2aᵣ ist ein (weiteres nur in Fig.1 gezeigtes) Stützblech 2b an der Grundstruktur des Hinterachsträgers 2 vorgesehen, welches die Lagerung für die beiden bereits kurz genannten und nun erläuterten Zwischenhebel 7 trägt.

Analog dem Stand der Technik werden nämlich die beiden Spurlenker 5 nicht direkt vom Aktuator 6 verlagert, sondern indirekt unter Zwischenschaltung jeweils eines am Hinterachsträger 2 (oder allgemein am Fzg.-Aufbau) gelagerten und somit abgestützten Zwischenhebels 7, wodurch der Aktuator 6 von auf die Spurlenker 5 einwirkenden Vorlasten, die insbesondere durch die Stützkraft einer vorliegend auf einer Federtellerstruktur 5a des jeweiligen Spurlenkers 5 abgestützten figürlich nicht dargestellten Tragfeder (gegenüber dem Fahrzeug-Aufbau) stammen, entlastet wird. Dabei ist in Vertikalrichtung betrachtet jeder Zwischenhebel 5 in seinem oberen Endabschnitt unter Zwischenschaltung einer Zwischenplatte 8 zur Aufnahme geeigneter Lagerstellen gelenkig mit dem Aktuator-Gehäuse 6a verbunden und in seinem unteren Endbereich gelenkig mit dem dem Radträger 1 abgewandten Ende des jeweiligen Spurlenkers 5 gelenkig verbunden und im zwischen diesen beiden Gelenk-Stellen liegenden Bereich verschwenkbar am genannten Stützblech 2b angelenkt, wobei die jeweiligen Gelenkverbindungen solchermaßen ausgebildet sind, dass der Zwischenhebel 5 um eine zur Fahrzeug-Längsachse parallele Achse verschwenkbar ist. Wird somit ausgehend von der in den Figuren dargestellten Position der relevanten Bauelemente bei Betrachtung in Fahrtrichtung das Aktuator-Gehäuse 6a geringfügig nach links, d.h. zum einzig dargestellten Radträger 1 hin verlagert, so wird als Folge dessen das untere Ende des Zwischenhebels 7 und somit auch der dem linksseitigen (figürlich dargestellten) Radträger 1 zugeordnete Spurlenker 5 in Fahrzeug-Querrichtung geringfügig nach rechts, d.h. vom einzig dargestellten Radträger 1 weg verlagert, als Folge dessen der einzig dargestellte Radträger 1 geringfügig nach links verschwenkt wird. An diesem wird somit ein geringer Lenkwinkel nach links eingestellt.

Mit der soweit beschriebenen Anordnung ist es möglich, den Aktuator 6 aus dem Raum zwischen dem linksseitigen und rechtsseitigen Spurlenker 5 heraus in Vertikalrichtung nach oben zu verlagern, so dass erstens aufgrund der nahezu beliebig positionierbaren Anlenkung der Umlenkhebel 7 am bzw. relativ zum Aktuator-Gehäuse 6a die in Fzg.-Querrichtung gemessene Baulänge des Aktuators 6 (Gehäuse 6a mit den Stellstangen 6bₗ bzw. 6bᵣ) durch die Lage und Länge der Spurlenker 5 nicht beschränkt ist und zweitens eine Abgasanlage oder dgl. in Fzg.-Längsrichtung zwischen den beiden Spurlenkern 5 hindurch geführt werden kann. Mit der erfindungsgemäßen fahrzeugaufbauseitigen Abstützung des Aktuators 6 über seine Stellstangen 6bₗ bzw. 6bᵣ wird zwar das Aktuator-Gehäuse 6a wie beschrieben um den Verstellweg hin und her bewegt, jedoch vermag die Flexibilität der elektrischen oder ggf. hydraulischen Zuleitungen (zur energetischen Versorgung bzw. Ansteuerung einer gewünschten Verstellbewegung) diese Bewegung leicht auszugleichen.

Vorteilhafterweise ist für die gelenkige Anbindung des Aktuator-Gehäuses 6a an den Zwischenhebel 7 ein einfaches Kugelgelenk vorgesehen, da eine vom Aktuator 6 initiierte Schwenkbewegung des Zwischenhebels 7 eine geringe Höhenänderung des Aktuator-Gehäuses 6a zur Folge hat, welche einfach durch einen geringen und selbstverständlich eingeschränkten Drehfreiheitgrad des Aktuator-Gehäuses 6a um die Stellstangen 6bₗ bzw. 6bᵣ ausgeglichen werden kann. Zwar ist mit einer solchen geringfügigen Drehbewegung des Aktuator-Gehäuses 6a eine Verschiebung der Kugelmitte des soeben genannten Kugelgelenks in Fahrzeuglängsrichtung gekoppelt, woraus eine kinematischen Zwangslage resultieren könnte, jedoch ist das Ausmaß dieser Verschiebung sehr klein und kann daher innerhalb von Bauteil- und Lagerelastizitäten kompensiert werden. Im Übrigen kann die soeben beschriebene Höhenänderung auch über eine Flexibilität in der Anbindungsstruktur der Aktuator-Stellstangen 6bₗ bzw. 6bᵣ an den Hinterachsträger 2 realisiert werden. Diese Anbindung muss in Fahrzeug-Querrichtung steif und darf in Vertikalrichtung (Fahrzeughochrichtung) flexibel ausgeführt werden, bspw. in Form einer geeigneten Aussparung in der Anbindung zum Hinterachsträger 2.

## Patentansprüche

1. Anordnung eines an den Hinterrädern eines zweispurigen Fahrzeugs einen Lenkwinkel einstellenden und letztlich am Fahrzeug-Aufbau abgestützten Aktuators (6), dessen über eine in Fahrzeug-Querrichtung verlagerbare Stellstange (6bₗ, 6bᵣ) dargestellte Verstellbewegung über einen an einem Hinterachsträger (2) oder am Fahrzeug-Aufbau verschwenkbar gelagerten Zwischenhebel (7) auf einen das jeweilige Hinterrad anteilig führenden Spurlenker (5) übertragen wird,
**dadurch gekennzeichnet, dass** der Aktuator (6) über seine Stellstange(n) (6bₗ, 6bᵣ) am Fahrzeug-Aufbau oder Hinterachsträger (2) abgestützt ist und der oder die Zwischenhebel (7) am Gehäuse (6a) des im Zuge einer Verstellbewegung in Fahrzeug-Querrichtung verlagerten Aktuators (6) angelenkt ist oder sind,
und zwar derart, dass die Anlenkung des Zwischenhebels (7) am Aktuatorgehäuse (6a) eine geringe Relativ-Drehbewegung um die Stellstange(n) des Aktuators (6bₗ, 6bᵣ) ermöglicht, und die Abstützung der Aktuator-Stellstange(n) (6bₗ, 6bᵣ) am Fahrzeug-Aufbau oder Hinterachsträger (2) eine geringe Relativbewegung in FahrzeugLängsrichtung erlaubt.

2. Anordnung nach Anspruch 1, wobei in Vertikalrichtung betrachtet das Aktuator-Gehäuse (6a) im oberen Endbereich und der Spurlenker (5) im unteren Endbereich des im dazwischen liegenden Bereich verschwenkbar gelagerten Zwischenhebels (7) angelenkt ist.

## Claims

1. An arrangement of an actuator (6) which adjusts a steer angle at the rear wheels of a two-track vehicle and which is ultimately supported on the vehicle body and the adjustment movement of which, said adjustment movement being imparted via an adjustment rod (6bₗ, 6bᵣ) that is displaceable in a vehicle transverse direction, is transmitted via an intermediate lever (7), which is mounted pivotably on a rear axle support (2) or on the vehicle body, to a toe link (5) that guides the corresponding rear wheel proportionately,
**characterised in that** the actuator (6) is supported via its adjustment rod(s) (6bₗ, 6bᵣ) on the vehicle body or rear axle support (2), and the intermediate lever(s) (7) is/are connected in an articulated manner to the housing (6a) of the actuator (6), the latter being displaced in the vehicle transverse direction during the course of an adjustment movement,
more especially in such a way that the articulated connection of the intermediate lever (7) to the actuator housing (6a) enables a small relative rotary movement about the actuator adjustment rod(s) (6bₗ, 6bᵣ), and the support of the actuator adjustment rod(s) (6bₗ, 6bᵣ) on the vehicle body or rear axle support (2) allows a small relative movement in the vehicle longitudinal direction.

2. An arrangement according to claim 1, wherein, as considered in the vertical direction, the actuator housing (6a) is connected in an articulated manner in the upper end region, and the toe link (5) is connected in an articulated manner in the lower end region of the intermediate lever (7) mounted pivotably in the region therebetween.

## Revendications

1. Agencement d'un actionneur (6) réglant l'angle de braquage des roues arrières d'un véhicule à deux lignes de roues et s'appuyant finalement sur la caisse du véhicule, dont le mouvement de réglage obtenu par l'intermédiaire d'une tige de réglage (6bi, 6br) déplaçable dans la direction transversale du véhicule est transmis, au moyen d'un levier intermédiaire (7) monté pivotant sur le support de l'essieu arrière (2) ou sur la carrosserie du véhicule, à une biellette (5) guidant proportionnellement la roue arrière respective,
**caractérisé en ce que**
l'actionneur (6) s'appuie par l'intermédiaire de sa (de ses) tige(s) de réglage (6bi, 6br) sur la caisse du véhicule ou le support (2) de l'essieu arrière, et, le(les) levier(s) intermédiaire(s) (7) est(sont) articulé(s) sur le boîtier (6a) de l'actionneur (6) déplacé au cours d'un mouvement de réglage dans la direction transversale du véhicule, de sorte que l'articulation du levier intermédiaire (7) sur le boîtier de l'actionneur (6a) permette un faible mouvement de rotation relatif autour de la (des) tige(s) de réglage (6bi, 6br) de l'actionneur, et que l'appui de la (des) tige(s) de réglage de l'actionneur (6bi, 6br) sur la caisse du véhicule ou le support de l'essieu arrière (2) autorise un faible mouvement relatif dans la direction longitudinale du véhicule.

2. Agencement conforme à la revendication 1, dans lequel, considéré dans la direction verticale, le boîtier de l'actionneur (6a) est articulé dans la zone d'extrémité supérieure et la biellette (5) est articulée dans la zone d'extrémité inférieure du levier intermédiaire (7) monté pivotant dans la zone située entre ces éléments.
